(19) Europäisches Patentamt
European Patent Office
Office européen des brevets

(11) **EP 0 588 884 B1**

(12) **EUROPEAN PATENT SPECIFICATION**

(45) Date of publication and mention
of the grant of the patent:
**15.01.1997 Bulletin 1997/03**

(21) Application number: **92912170.5**

(22) Date of filing: **12.06.1992**

(51) Int Cl.6: **H03L 7/085**, H03D 3/02

(86) International application number:
**PCT/DK92/00181**

(87) International publication number:
**WO 92/22960 (23.12.1992 Gazette 1992/32)**

(54) **A METHOD AND AN APPARATUS FOR DETERMINING PHASE AND FREQUENCY DEVIATION**

VERFAHREN UND VORRICHTUNG ZUR BESTIMMUNG VON PHASEN- UND
FREQUENZABWEICHUNG

PROCEDE ET APPAREIL DE DETERMINATION DE DIFFERENCE DE PHASE ET DE FREQUENCE

(84) Designated Contracting States:
**AT BE CH DE DK ES FR GB GR IT LI NL SE**

(30) Priority: **14.06.1991 DK 1149/91**

(43) Date of publication of application:
**30.03.1994 Bulletin 1994/13**

(73) Proprietors:
• **DANCALL TELECOM A/S**
**DK-9490 Pandrup (DK)**
• **CETELCO A/S**
**DK-9530 Stovring (DK)**

(72) Inventor: **MADSEN, Benny**
**DK-9000 Aalborg (DK)**

(74) Representative: **Wittrup, Flemming et al**
**c/o Hofman-Bang & Boutard, Lehmann & Ree
A/S,
Hans Bekkevolds Allé 7
2900 Hellerup (DK)**

(56) References cited:
**EP-A- 0 389 974     US-A- 4 943 982**

• **DERWENT'S ABSTRACT, No. 0K-36 443/43 &
SU-A-720680 publ. week 0K43**

## Description

The invention concerns a method and an apparatus for determining a phase difference between two sine-shaped electrical signals.

Digital communications systems, such as e.g. the common European radiotelephone system, which is also called GSM, often employ coherent data receivers. For these to function correctly, it is essential that the data receiver is either in phase and time synchronism with the signal received, or somehow knows the correct phase and time synchronism.

However, in communications systems based on transmission of packets of data which have a finite length, it is not necessary that the data receiver is constantly in phase and time lock with the signal received, as long as it is ensured that the phase and time errors between the data receiver and the received signal are of a modest size.

In e.g. the GSM system, which is based on this type of transmission, each packet of data contains information for determining phase and time synchronism. Accordingly, if frequency synchronization is performed, and the phase is obtained from the transmitted information, it is not necessary that the data receiver constantly attempts to be in phase lock with the signal received.

A central function in a receiver for e.g. the GSM system is therefore determination of the frequency error between the received signal and the own reference of the receiver.

Phase modulation is employed in e.g. the GSM system. This means that in principle the transmitted bits are represented as phase shifts in the signal. The said information for determining frequency synchronism may consist of a long row of uniform bits, which means e.g. that the phase increases evenly, or in other words, that a pure sine wave having a slightly higher frequency than the carrier wave is transmitted.

The European Patent Application EP-A-0 389 974 discloses a method and an apparatus for correction of frequency errors in e.g. such a communications system. Here, the received signal is mixed with a reference signal, generated in the receiver, to produce the so-called baseband signal. This signal appears in a complex form with both a real portion and an imaginary portion. Digital signal processing of this signal produces a control signal which can be used for controlling the reference signal of the receiver. However, the digital signal processing is relatively complex, since e.g. the phase is determined by means of an inverse tangent function, which necessitates either a series expansion requiring a large amount of computation, or a preperformed tabulation of the inverse tangent function, which likewise requires an extremely large amount of computation.

US-A-4 943 982 discloses an apparatus for determining a phase difference between two sine-shaped electrical signals, said phase difference being known to be small, said signals being represented in a complex form, said apparatus having signal paths for the two signals and comprising means which are capable of multiplying the complex conjugated value of one of the signals by the other signal and which are capable of representing the multiplication result on an output and using it as an estimate of the phase difference between the two signals.

The invention is defined by Claims 1 and 4.

The invention provides a method enabling a frequency deviation of a signal from a known reference frequency to be determined in a much simpler manner, so that the method can be performed in analog mode or in digital mode, as desired, there being just employed simple multiplications of the incoming signals.

This is achieved according to the invention by delaying the signal exactly ¼ of the period time of the known reference frequency and phase shifting the signal 90°, after which the result thereof is multiplied by the complex conjugated value of the signal. By small frequency deviations the imaginary value of the multiplication result can be used as a very accurate estimate for the frequency deviation.

When moreover, as stated in claim 2, the signal is passed through an automatically adjusted amplifier circuit giving the signal a constant amplitude, then the method can be employed even if the amplitude of the signal varies.

In a special embodiment of the invention the signal is transmitted through an analog-digital converter, as mentioned in claim 3, following which the signal processing takes place digitally.

Claim 4 defines an apparatus for performing the method for determining the frequency deviation with respect to a reference frequency. Claims 5 and 6 define embodiments which moreover comprise an automatically adjusted amplifier circuit and an analog/digital converter, respectively.

The invention will be explained more fully below with reference to the drawing, in which

fig. 1 shows a block diagram for a transmitter/receiver in which the invention can be utilized,

fig. 2 shows a unit for determining the phase difference between two signals,

fig. 3 shows a unit which is capable of determining the frequency deviation of a signal from a reference frequency,

fig. 4 shows the unit of fig. 3 supplemented with an automatically adjusted amplifier circuit, and

fig. 5 shows the unit of fig. 4 supplemented with an analog/digital converter.

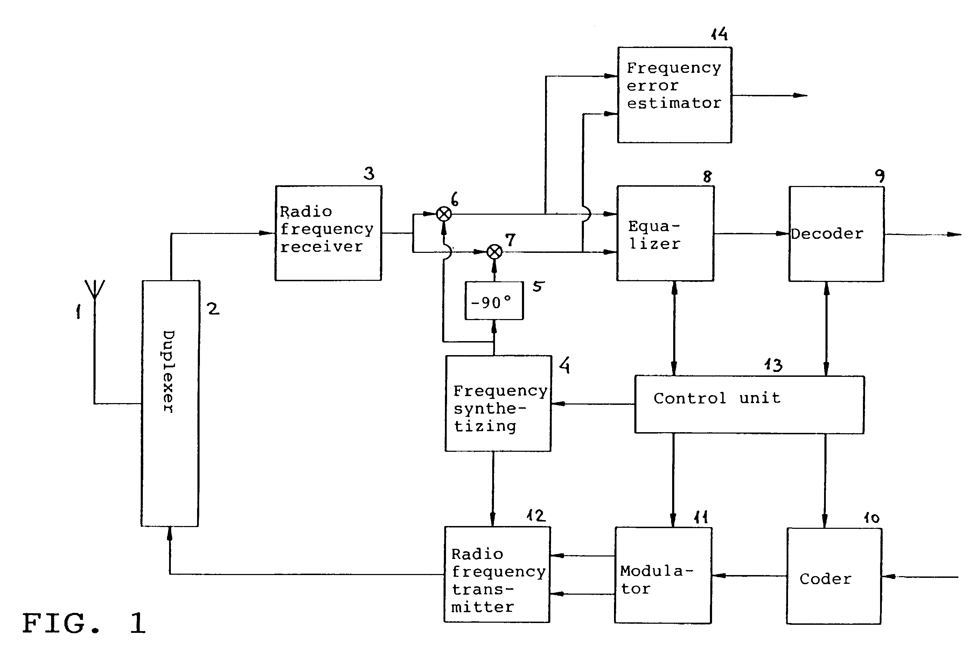

Fig. 1 shows a block diagram for a transmitter/receiver known per se for a digital radiotelephone system, such as e.g. the common European digital radiotelephone system, which is also called GSM, in which the invention can be utilized.

A signal is received on an antenna 1 and passes a duplexer 2, and then it arrives at the radio frequency receiver 3. The output signal from this is passed to mixing points 6 and 7. The frequency synthetizing unit 4 generates an oscillator signal which should desirably have the same frequency as the carrier wave frequency in the signal received on the antenna 1. The oscillator signal is transmitted to the mixing point 6 and via the phase shifter unit 5 to the mixing point 7. The mixing points 6 and 7 provides the so-called baseband signal in a complex form, which is transmitted to the equalizer 8 and further on to the decoder 9, which represents the received information on its output. Also included are a control unit 13 as well as the transmitter circuits 10, 11 and 12.

As mentioned, the oscillator signal from the frequency synthesizing unit 4 should desirably have the same frequency as the carrier wave for the received signal. However, to ensure correct reception it is necessary to synchronize the oscillator signal to the received frequency at the beginning of each packet of data. A frequency error estimator 14 is provided for this purpose, and it is in this unit that the invention described here can be employed.

In e.g. the GSM system phase modulation is used for coding the transmitted information. This means that the transmitted bits are represented as phase shifts in the transmitted signals. Precisely owing to the synchronization data packets are regularly transmitted with a frequency correction sequence consisting of a long row of uniform bits, e.g. a series of 1's. This means that the phase of the transmitted high frequency signal increases evenly. This in turn means that a pure sine wave having a frequency slightly higher than the carrier wave frequency is transmitted in reality. If the carrier wave frequency (measured in radians/sec) is designated $\omega_c$ and the baseband signal frequency $\omega_o$, the transmitted signal will thus have a frequency of $\omega_c + \omega_o$ in this case. The oscillator frequency from the frequency synthesizing unit 4 can then be represented by $\omega_c + \Delta\omega$, $\Delta\omega$ corresponding to a small frequency error. It is well-known from the literature that the output signal from the mixing points 6 and 7 will then contain a term having the frequency $\omega_o + \Delta\omega$ as well as some high frequency terms, which, however, may be filtered off by means of lowpass filters.

The frequency error estimator 14 serves to detect the frequency error $\Delta\omega$, following which its output signal may be used e.g. for adjusting the oscillator frequency from the frequency synthesizing unit 4, so that the frequency error proceeds toward zero. If the complex output signal from the mixing points 6 and 7 is designated r(t), its frequency, which is thus $\omega_o + \Delta\omega$ here, may be designated $\omega_r(t)$ and its phase correspondingly $\phi_r(t)$.

The instantaneous frequency can then be derived by differentiating the phase, which means that

$$\omega_r(t) = \frac{d\phi_r(t)}{dt}$$

If, however, the frequency error can be assumed to be constant over a time interval $\Delta t$, the instantaneous frequency can more easily be found by means of the following expression:

$$\omega_r(t) = \frac{\phi_r(t) - \phi_r(t-\Delta t)}{\Delta t}$$

The frequency can thus be found by calculating a phase difference.

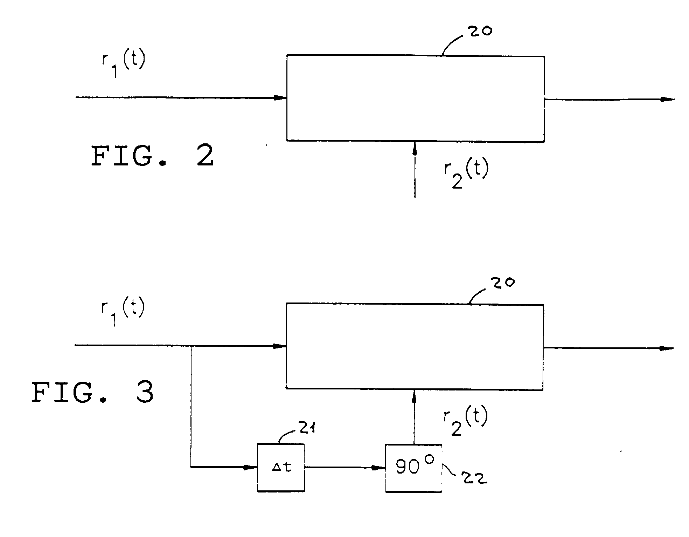

Fig. 2 shows a unit 20 for calculating the phase difference between two signals $r_1(t)$ and $r_2(t)$, which are both supplied to the unit, and which are both in a complex form.

The following formula, wherein a $*$ denotes the complex conjugated figure:

$$Im\{z_2 . z^*_1\} = Im\{|z_2| . e^{j\phi2} . |z_1| . e^{-j\phi1}\}$$

$$= |z_2| . |z_1| . sine(\phi_2 - \phi_1)$$

generally applies to two complex figures $z_1$ and $z_2$

$$(z_1 = |z_1| . e^{j\phi1} \; ; z_2 = |z_2| . e^{j\phi2})$$

When the phase difference between the two figures is small, then

$$\text{sine}(\phi_2\text{-}\phi_1) = \phi_2\text{-}\phi_1$$

hence

$$\phi_2\text{-}\phi_1 = \frac{\text{Im}\{z_2 . z_1{}^*\}}{|z_2| . |z_1|}$$

for small phase differences between the two complex figures.

This expression shows that for small phase differences between two complex figures an approximation for the phase difference between the two complex figures can be found using multiplication. Further

$$\phi_2\text{-}\phi_1 = \frac{\text{Im}\{(\text{Re}\{z_2\}+j.\text{Im}\{z_2\})(\text{Re}\{z_1\}\text{-}j.\text{Im}\{z_1\})\}}{|z_2| . |z_1|}$$

$$= \frac{\text{Re}\{z_1\}.\text{Im}\{z_2\}\text{-}\text{Re}\{z_2\}.\text{Im}\{z_1\}}{|z_2| . |z_1|}$$

if this expression is used for the phase difference between two complex figures on the unit 20 from fig. 2, it will thus be seen that for the unit 20 to calculate the phase difference between the two signals $r_1(t)$ and $r_2(t)$, it must contain an electronic circuit capable of calculating the following expression:

$$\Delta\phi(t)=\phi_2(t)\text{-}\phi_1(t) = \frac{\text{Im}\{r_2(t).r_1{}^*(t)\}}{|r_2(t)| . |r_1(t)|}$$

$$\frac{\text{Re}\{r_1(t)\}.\text{Im}\{r_2(t)\}\text{-}\text{Re}\{r_2(t)\}.\text{Im}\{r_1(t)\}}{|r_2(t)| . |r_1(t)|}$$

As mentioned before, the instantaneous frequency of the complex r(t) on the output of the mixing points 6 and 7 in fig. 1 can be found by means of the expression

$$\omega_r(t) = \frac{\phi_r(t) \text{-}\phi_r(t\text{-}\Delta t)}{\Delta t}$$

Where the unit from fig. 2 can calculate the phase difference between two different signals $r_1(t)$ and $r_2(t)$, we thus here need a unit capable of calculating the phase difference between the same signal at two different points of time; but this can be obtained merely by letting the one signal be a delayed version of the other. However, for the expression to apply, the phase difference must be quite small, as mentioned, and thus also the time difference $\Delta t$ must be quite small.

As mentioned, the frequency $\omega_r(t) = \omega_o(t) + \Delta\omega(t)$. If we now select $\Delta t$ to be a quarter wavelength for $\omega_o(t)$, we would, if $\Delta\omega$ was zero, obtain a phase difference of 90°. Now we thus obtain a phase difference of 90° plus an error contribution because of $\Delta\omega$. If the delayed signal is then phase shifted +90°, we thus obtain two signals whose phase difference is partly so small that the unit from fig. 2 can be used, and is also precisely an expression of the frequency error $\Delta\omega(t)$ in which we are interested.

Thus, when $\Delta t$ is equal to a quarter wavelength of $\omega_o$

$$\omega_r(t) = \omega_0(t)+\Delta\omega(t) = \frac{\phi_r(t) \text{-}\phi_r(t\text{-}\Delta t)}{\Delta t}$$

$$\Delta\omega(t) = \frac{\phi_r(t) - [\phi_r(t-\Delta t) + 90^\circ]}{\Delta t}$$

Fig. 3 shows the unit 20 known from fig. 2 as well as a delay unit 21 and a phase shifter unit 22, which are so incorporated that the signal $r_1(t)$ is partly delayed corresponding to a quarter wavelength for the frequency $\omega_o$ and is partly phase shifted 90° before being used as the signal $r_2(t)$. The overall function of the circuit in fig. 3 will thus be

$$\Delta\omega(t) = \frac{\text{Im}\{r(t).[j.r(t-\Delta t]^*\}}{\Delta t.|r(t)|.|r(t-\Delta t)|}$$
$$= \frac{-\text{Re}\{r(t).r^*(t-\Delta t)\}}{\Delta t.|r(t)|.|r(t-\Delta t)|}$$
$$= \frac{-\text{Re}\{r(t)\}.\text{Re}\{r(t-\Delta t)\}.-\text{Im}\{r(t)\}.\text{Im}\{r(t-\Delta t)\}}{\Delta t.|r(t)|.|r(t-\Delta t)|}$$

If we assume that the numerical value of $r(t)$ is constant, then, because also $\Delta t$ is constant, the denominator of the fraction is constant, which means that by computing the numerator of the fraction we obtain an expression of the frequency error multiplied by a constant. Thus, the electronic circuit does not have to take the denominator of the fraction into consideration.

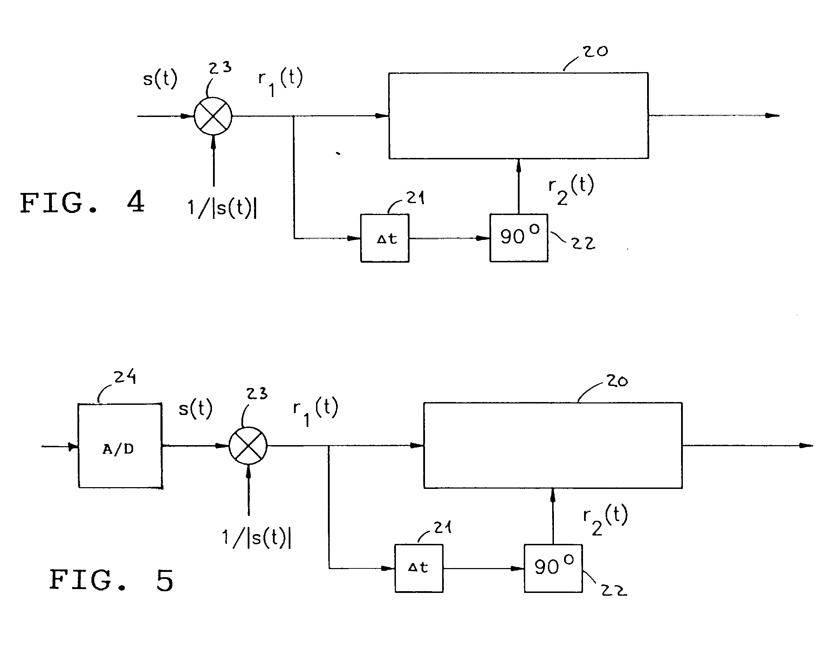

If the condition that the numerical value of $r(t)$ is constant is not satisfied, the circuit can be supplemented with an automatically adjusted amplifier circuit 23, as shown in fig. 4, ensuring that the signal has a constant amplitude on its output.

The circuit described here can function either in analog mode or in digital mode. The analog mode of operation is described above; however, it will frequently be an advantage to have the signal processing take place digitally. In that case the circuit is moreover provided with an analog/digital converter 24, as shown in fig. 5.

It will be appreciated that the automatically adjusted amplifier circuit can also be positioned before the analog/digital converter and thus work in analog mode, while the rest of the signal processing takes place digitally.

The described method can thus be used for calculating the phase difference between two signals, as shown in fig. 2, or it may be used for calculating how much the frequency of a signal differs from a known reference frequency, as shown in the subsequent figures. In addition to the use described here in a receiver in a digital communications system, the invention can also be used in all other fields where it is desired to determine a phase or frequency deviation, provided that the conditions described above are satisfied.

An example is two radio transmitters transmitting on two different frequencies which are close to each other, it being desired to determine whether the frequency of the one transmitter drifts with respect to the other.

## Claims

1. A method of determining the frequency deviation of a sine-shaped electrical signal from a known reference frequency, said frequency deviation being known to be small, and said signal being represented in a complex form, characterized by delaying said signal ¼ of the period time of the known reference frequency and phase shifting the delayed signal 90°, and then multiplying the result thereof by the complex conjugated value of said signal, and using the imaginary value of the multiplication result as an estimate of said frequency deviation.

2. A method according to claim 1, characterized by passing said signal prior to the signal processing through an automatically adjusted amplifier circuit (23) which gives the signal a constant amplitude.

3. A method according to claim 1 or 2, characterized by passing said signal prior to the signal processing through an analog/digital converter (24), said signal processing then taking place digitally.

4. An apparatus for determining the frequency deviation of a sine-shaped electrical signal from a known reference frequency, said frequency deviation being known to be small, and said signal being represented in a complex form and connected to an input of a multiplication unit (20) having also a second input, said unit multiplying the complex conjugated value of said signal by a signal on the second input, characterized in that said signal is also connected to said second input through a delay unit (21) with a delay time of ¼ of the period time of the known reference frequency and a phase shifter unit (22) providing a phase shift of 90°, and that the apparatus is adapted to present the imaginary value of the multiplication result on an output and use it as an estimate of said frequency deviation.

**5.** An apparatus according to claim 4, characterized in that it comprises an automatically adjusted amplifier circuit (23) in the signal path for said signal, said amplifier circuit giving the signal a constant amplitude before the signal processing.

**6.** An apparatus according to claim 4 or 5, characterized in that it comprises an analog/digital converter (24), and that the signal processing circuits are adapted to perform the signal processing digitally.


**Patentansprüche**

**1.** Verfahren zum Bestimmen der Frequenzabweichung eines sinusförmigen elektrischen Signals von einer bekannten Referenzfrequenz, wobei die Frequenzabweichung als klein bekannt ist und das Signal in einer komplexen Form dargestellt wird, gekennzeichnet durch Verzögern des Signals um 1/4 der Periodendauer der bekannten Referenzfrequenz und Verschieben der Phase des verzögerten Signals um 90° und dann Multiplizieren des Ergebnisses davon mit dem komplex konjugierten Wert des Signals, und Verwenden des imaginären Werts des Ergebnisses der Multiplikation als eine Schätzung für die Frequenzabweichung.

**2.** Verfahren nach Anspruch 1, gekennzeichnet durch Leiten des Signals vor der Signalverarbeitung durch eine automatisch eingestellte Verstärkerschaltung (23), die dem Signal eine konstante Amplitude gibt.

**3.** Verfahren nach Anspruch 1 oder 2, gekennzeichnet durch Leiten des Signals vor der Signalverarbeitung durch einen Analog-Digital-Wandler (24), wobei die Signalverarbeitung dann digital stattfindet.

**4.** Vorrichtung zum Bestimmen der Frequenzabweichung eines sinusförmigen elektrischen Signals von einer bekannten Referenzfrequenz, wobei die Frequenzabweichung als klein bekannt ist und das Signal in einer komplexen Form dargestellt wird, die mit einem Eingang einer Multiplikationseinheit (20), die auch einen zweiten Eingang besitzt, verbunden ist, wobei die Einheit den komplex konjugierten Wert des Signals mit einem Signal an dem zweiten Eingang multipliziert, dadurch gekennzeichnet, daß das Signal über eine Verzögerungseinheit (21) mit einer Verzögerungszeit von 1/4 der Periodendauer der bekannten Referenzfrequenz und einer Phasenschiebereinheit (22), die eine Phasenverschiebung von 90° liefert, auch mit dem zweiten Eingang verbunden ist, und daß die Vorrichtung dazu geeignet ist, den imaginären Wert des Ergebnisses der Multiplikation an einem Ausgang zu liefern und es als eine Schätzung für die Frequenzabweichung zu verwenden.

**5.** Vorrichtung nach Anspruch 4, dadurch gekennzeichnet, daß sie eine automatisch eingestellte Verstärkerschaltung (23) im Signalweg für das Signal beinhaltet, wobei die Verstärkerschaltung dem Signal vor der Signalverarbeitung eine konstante Amplitude gibt.

**6.** Vorrichtung nach Anspruch 4 oder 5, dadurch gekennzeichnet, daß sie einen Analog-Digital-Wandler (24) beinhaltet und daß die Signalverarbeitungsschaltungen dazu geeignet sind, die Signalverarbeitung digital durchzuführen.


**Revendications**

**1.** Procédé pour déterminer l'écart de fréquence d'un signal électrique sinusoïdal par rapport à une fréquence de référence connue, ledit écart de fréquence étant connu pour être faible, et ledit signal étant représenté sous une forme complexe, caractérisé en ce qu'il consiste à retarder ledit signal d'un quart de la durée de la période de la fréquence de référence connue et à déphaser de 90° le signal retardé, et puis multiplier le résultat par la valeur complexe conjuguée dudit signal, et utiliser la valeur imaginaire du résultat de la multiplication comme estimation dudit écart de fréquence.

**2.** Procédé selon la revendication 1, caractérisé en ce qu'on fait d'abord passer ledit signal avant ledit traitement de signal à travers un circuit amplificateur à réglage automatique (23) qui donne au signal une amplitude constante.

**3.** Procédé selon la revendication 1 ou 2, caractérisé en ce qu'on fait passer le signal avant le traitement de signal à travers un convertisseur analogique/numérique (24), ledit traitement du signal étant ensuite effectué de manière numérique.

**4.** Appareil pour déterminer l'écart de fréquence d'un signal électrique sinusoïdal par rapport à une fréquence de référence connue, ledit écart de fréquence étant connu pour être faible, et ledit signal étant représenté sous une forme complexe et appliqué à une entrée d'une unité de multiplication (20) ayant également une seconde entrée, ladite unité multipliant la valeur complexe conjuguée dudit signal par un signal présent sur la seconde entrée, caractérisé en ce que ledit signal est aussi appliqué à ladite seconde entrée à travers une unité à retard (21) dont le retard est égal au quart de la durée de la période de la fréquence de référence connue et à travers un déphaseur (22) introduisant un déphasage de 90°, et en ce que l'appareil est adapté pour présenter la valeur imaginaire du résultat de la multiplication sur une sortie, et à l'utiliser comme une estimation dudit écart de fréquence.

5. Appareil selon la revendication 4, caractérisé en ce qu'il comprend un circuit amplificateur à réglage automatique (23) sur le trajet du signal, ledit circuit amplificateur donnant au signal une amplitude constante avant le traitement de ce signal.

6. Appareil selon la revendication 4 ou 5, caractérisé en ce qu'il comprend un convertisseur analogique/numérique (24) et en ce que les circuits de traitement du signal sont adaptés pour effectuer le traitement du signal de manière numérique.

FIG. 1

Decoder 9

Coder 10

Control unit 13

Frequency error estimator 14

Equa- lizer 8

Modula- tor 11

Frequency synthe- tizing 4

-90° 5

7

6

Radio frequency receiver 3

Radio frequency trans- mitter 12

Duplexer 2

1

$r_1(t)$

20

$r_2(t)$

FIG. 2

$r_1(t)$

20

FIG. 3

$r_2(t)$

21

$\Delta t$

$90^{\circ}$

22

FIG. 4

FIG. 5